(19) Europäisches Patentamt
European Patent Office
Office européen des brevets

(11) **EP 3 876 647 B1**

(12) **EUROPEAN PATENT SPECIFICATION**

(45) Date of publication and mention
of the grant of the patent:
**25.03.2026 Bulletin 2026/13**

(21) Application number: **18938258.3**

(22) Date of filing: **01.11.2018**

(51) International Patent Classification (IPC):
*H04L 1/18* (2023.01)   *H04W 72/12* (2023.01)

(52) Cooperative Patent Classification (CPC):
**H04B 17/309; H04L 1/1819; H04L 1/1822;
H04L 1/1864; H04L 1/189; H04W 52/242;
H04W 72/23**

(86) International application number:
**PCT/JP2018/040750**

(87) International publication number:
**WO 2020/090091 (07.05.2020 Gazette 2020/19)**

(54) **USER TERMINAL AND WIRELESS COMMUNICATION METHOD**

**BENUTZERENDGERÄT UND DRAHTLOSKOMMUNIKATIONSVERFAHREN**

**TERMINAL UTILISATEUR ET PROCÉDÉ DE COMMUNICATION SANS FIL**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.09.2021 Bulletin 2021/36**

(73) Proprietor: **NTT DOCOMO, INC.**
**Chiyoda-ku**
**Tokyo 100-6150 (JP)**

(72) Inventors:
• **TAKEDA, Kazuki**
**Tokyo 100-6150 (JP)**
• **NAGATA, Satoshi**
**Tokyo 100-6150 (JP)**
• **WANG, Lihui**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(56) References cited:
**EP-A1- 3 860 290       JP-A- 2013 507 095
US-A1- 2018 199 359**

• **NOKIA ET AL: "On Configured Grant
enhancements for NR URLLC", 10 August 2018,
3GPP DRAFT;
R1-1808570_NR_URLLC_CONFIGUREDGRANTS_FINAL, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, XP051515947**
• **NTT DOCOMO ET AL: "Summary of 7.2.6.4
Enhanced UL grant-free transmissions", 10
October 2018, 3GPP DRAFT; R1-1811822, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, XP051519149**
• **SAMSUNG: "Potential enhancement for UL
grant-free transmission", 3GPP TSG RAN WG1
MEETING #94BIS R1- 1810881, 29 September
2018 (2018-09-29), XP051518286**
• **INTEL CORPORATION: "Enhancements to
configured grant PUSCH", 3GPP TSG RAN WG1
MEETING #94 R1- 1808707, 11 August 2018
(2018-08-11), XP051516082**

**Description**

Technical Field

The present disclosure relates to a user terminal and a radio communication method in a next-generation mobile communication system.

Background Art

In the universal mobile telecommunications system (UMTS) network, Long Term Evolution (LTE) has been specified for the purpose of further increasing a data rate, providing low latency, and the like (see Non Patent Literature 1). Furthermore, LTE-Advanced (third generation partnership project (3GPP) Release (Rel.) 10-14) has been specified for the purpose of further increasing capacity and enhancement, and the like of LTE (3GPP Rel. 8 and 9).

LTE's successor systems (for example, also referred to as 5th generation mobile communication system (5G), 5G plus (+), New Radio (NR), or 3GPP Rel. 15 or later, and the like) have also been studied.

US 2018/199359 A1 relates to methods and systems for grant-free uplink transmissions. Grant-free transmissions refer to data transmissions that are performed without communicating grant-based signaling in a dynamic control channel, such as a PUCCH or a PDCCH.

NOKIA ET AL: "On Configured Grant enhancements for NR URLLC", [Online] 10 August 2018 (2018-08-10), 3GPP DRAFT; R1-1808570_NR_URLLC_CONFIGUREDGRANTS_FINAL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, relates to enhancements on UL CG transmission.

NTT DOCOMO ET AL: "Summary of 7.2.6.4 Enhanced UL grant-free transmissions", [Online] 10 October 2018 (2018-10-10), 3GPP DRAFT; R1-1811822, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, relates to supporting multiple active configured grant configurations for a given BWP of a serving cell.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (for example, NR), scheduling using a dynamic grant and scheduling using a configured grant have been studied. It has also been studied that a plurality of configured grants (multi configured grant) is configured in one cell for a UE.

However, parameters for configuration of the plurality of configured grants have not yet been studied. If the configuration of the plurality of configured grants is not performed appropriately, system performance may be degraded due to an increase in configuration overhead, latency in transmission based on the configured grant, and the like.

Thus, an object of the present disclosure is to provide a user terminal and a radio communication method for appropriately performing configuration of a plurality of configured grants.

Solution to Problem

The present invention is defined in the appended independent claims. Further preferred embodiments are defined in the dependent claims.

Advantageous Effects of Invention

According to one aspect of the present disclosure, configuration of a plurality of configured grants can be appropriately performed.

Brief Description of Drawings

Fig. 1 is a diagram illustrating an example of a CG configuration for a use case 1.
Fig. 2 is a diagram illustrating an example of the CG configuration for a use case 2.
Fig. 3 is a diagram illustrating an example of common parameters and separate parameters in a plurality of the CG configurations.
Fig. 4 is a diagram illustrating another example of the common parameters and the separate parameters in the plurality of CG configurations.
Fig. 5 is a diagram illustrating an example of a schematic configuration of a radio communication system according to an embodiment.
Fig. 6 is a diagram illustrating an example of a configuration of a base station according to an embodiment.
Fig. 7 is a diagram illustrating an example of a configuration of a user terminal according to an embodiment.
Fig. 8 is a diagram illustrating an example of a hardware configuration of the base station and the user terminal according to an embodiment.

Description of Embodiments

<Dynamic grant-based transmission and configured grant-based transmission (type 1, type 2)>

Dynamic grant-based transmission and configured grant-based transmission have been studied for UL transmission of NR.

The dynamic grant-based transmission is a method of performing the UL transmission by using an uplink shared channel (for example, Physical Uplink Shared Channel (PUSCH)) on the basis of a dynamic UL grant (dynamic grant).

The configured grant-based transmission is a method of performing the UL transmission by using an uplink shared channel (for example, PUSCH) on the basis of a UL grant (which may be referred to as, for example, configured grant, a configured UL grant, or the like) configured by a higher layer. In the configured grant-based transmission, a UL resource is already allocated to a UE, and the UE can autonomously perform UL transmission by using the configured resource, and thus implementation of low latency communication can be expected.

The dynamic grant-based transmission may be referred to as a dynamic grant-based PUSCH, UL transmission with dynamic grant, PUSCH with dynamic grant, UL transmission with UL grant, UL grant-based transmission, UL transmission scheduled (for which a transmission resource is configured) by dynamic grant, and the like.

The configured grant-based transmission may be referred to as a configured grant-based PUSCH, UL transmission with configured grant, PUSCH with configured grant, UL transmission without UL grant, UL grant-free transmission, UL transmission scheduled (for which transmission resource is configured) by configured grant, and the like.

Furthermore, the configured grant-based transmission may be defined as one type of UL semi-persistent scheduling (SPS). In the present disclosure, "configured grant" may be mutually replaced with "SPS", "SPS/configured grant", and the like.

Several types (type 1, type 2, and the like) have been studied for the configured grant-based transmission.

In configured grant type 1 transmission (type 1 configured grant), parameters (which may be referred to as configured grant-based transmission parameters, configured grant parameters, or the like) used for the configured grant-based transmission are configured to the UE with use of only higher layer signaling.

In configured grant type 2 transmission (type 2 configured grant), the configured grant parameters are configured to the UE by higher layer signaling. In the configured grant type 2 transmission, notification of at least some of the configured grant parameters to the UE may be provided by physical layer signaling (for example, downlink control information (DCI) for activation described later).

Here, higher layer signaling may be, for example, any of Radio Resource Control (RRC) signaling, Medium Access Control (MAC) signaling, broadcast information, and the like, or a combination thereof.

For the MAC signaling, for example, a MAC Control Element (MAC CE), a MAC Protocol Data Unit (PDU), or the like may be used. The broadcast information may be, for example, a Master Information Block (MIB), a System Information Block (SIB), Remaining Minimum System Information (RMSI), Other System Information (OSI), or the like.

The configured grant parameters may be configured to the UE with use of a ConfiguredGrantConfig information element of RRC. The configured grant parameters may include information specifying a configured grant resource, for example. The configured grant parameters may include information regarding, for example, an index of the configured grant, a time offset, periodicity, the number of repeated transmissions of a transport block (TB) (the number of repeated transmissions may be expressed as K), a Redundancy Version (RV) sequence used in the repeated transmissions, the above-described timer, and the like.

Here, the periodicity and the time offset each may be represented in units of symbols, slots, subframes, frames, or the like. The periodicity may be indicated by, for example, a given number of symbols. The time offset may be indicated by an offset with respect to a timing of a given index (such as slot number = 0 and/or system frame number = 0), for example. The number of repeated transmissions may be an arbitrary integer, for example, 1, 2, 4, 8, or the like. When the number of repeated transmissions is n (> 0), the UE may perform configured grant-based PUSCH transmission of a given TB by using n transmission occasions.

When the configured grant type 1 transmission is configured to the UE, the UE may determine that one or a plurality of configured grants is triggered. The UE may perform PUSCH transmission without dynamic grant by using a configured resource (which may be referred to as a configured grant resource, a transmission occasion, or the like) for the configured grant-based transmission. Note that, even when the configured grant-based transmission is configured to the UE, the UE may skip the configured grant-based transmission when there is no data in a transmission buffer.

When the configured grant type 2 transmission is configured and notification of a given activation signal is provided, the UE may determine that one or a plurality of configured grants is triggered (or activated). The given activation signal (for example, DCI for activation) may be DCI (PDCCH) scrambled by a Cyclic Redundancy Check (CRC) with a given identifier (for example, a Configured Scheduling (CS)-Radio Network Temporary Identifier (RNTI)). Note that, the DCI may be used for control of deactivation, retransmission, or the like of the configured grant.

The UE may determine whether or not to perform PUSCH transmission by using the configured grant resource configured in the higher layer, on the basis of the given activation signal described above. The UE may release (which may be referred to as deactivate or the like) the resource (PUSCH) corresponding to the configured grant on the basis of the DCI that deactivates the configured grant, or expiration of a given timer (elapse of a given time).

The UE may perform PUSCH transmission without dynamic grant by using an activated resource (which may be referred to as a configured grant resource, a transmission occasion, or the like) for the configured grant-based transmission. Note that, even when the configured grant-based transmission is activated (in an active state), the UE may skip the configured grant-based transmission when there is no data in the transmission buffer.

Note that, each of the dynamic grant and the configured grant may be referred to as an actual UL grant. That is, the actual UL grant may be higher layer signaling (for example, ConfiguredGrantConfig information element of RRC), physical layer signaling (for example, the given activation signal described above), or a combination thereof.

By the way, a plurality of configured grants (multi configured grant) may be configured to the UE in one cell or one Bandwidth Part (BWP) (partial band), and the plurality of configured grants may be in a state of being triggered (or activated) in a certain period.

However, parameters for a plurality of configured grant configurations is not clear. If configuration of the plurality of configured grants is not performed appropriately by using appropriate parameters, system performance may be degraded due to an increase in configuration overhead, a latency in transmission based on the configured grant, and the like.

Thus, the present inventors have conceived parameters for configuration of the plurality of configured grants and a configuration method using the parameters.

Hereinafter, embodiments according to the present disclosure will be described in detail with reference to the drawings. Radio communication methods according to respective embodiments may be applied individually or in combination.

Hereinafter, "configured grant" may be mutually replaced with "configuration of configured grants", "configured grant configuration", and "configured grant composition". Furthermore, "determining the configured grant for performing the configured grant-based transmission" may be simply referred to as "selecting the configured grant". Furthermore, "traffic" may be mutually replaced with at least one of "data", "UL data", or "transport block".

Hereinafter, "carrier" may be mutually replaced with "cell" and "component carrier (CC)".

The following embodiments mainly describe examples applied to an UL, but may be applied to a DL. For example, operation of the type 2 configured grant (or type 3 configured grant) can also be applied to a PDSCH (SPS PDSCH, downlink SPS). "Configured grant configuration (Configured Grant Config)" may be replaced with "SPS configuration (SPS-Config)". "Transmission of a configured grant PUSCH" may be replaced with "Reception of an SPS PDSCH".

Hereinafter, "plurality of CG configurations" may be mutually replaced with "plurality of CG configurations in one CG configuration group".

(Radio Communication Method)

A plurality of configured grant (CG) configurations are configured to the UE for a given BWP or carrier. The UE is notified of the CG configurations by higher layer signaling (for example, RRC signaling).

When a plurality of CG configurations (type 1) is configured to the UE, or when a plurality of CG configurations (type 2) is configured to the UE and, further, a plurality of CG configurations among them is activated, the UE may select one of the plurality of CG configurations and transmit a PUSCH by using the selected CG configuration.

Note that, the UE reports the number of CG configurations that can be configured for the given BWP or carrier to a base station in advance as terminal capability information. Here, the number of CG configurations that can be configured in the type 1 CG configuration and the number of CG configurations that can be configured in the type 2 may be reported separately. The UE may assume that the number of CG configuration configured for the BWP or carrier does not exceed a value specified in advance or a value reported to the base station as the terminal capability information.

Furthermore, in the type 2 CG configuration, the UE reports the number of CG configurations that can be activated for the given BWP or carrier to the base station in advance as the terminal capability information. The UE may assume that the number of CG configurations activated for the BWP or carrier does not exceed a value specified in advance or a value reported to the base station as the terminal capability information.

<Use case>

The UE can implement the following use cases 1 and 2 by using a plurality of CG configurations.

<<Use case 1>>

Different CG configurations may correspond to different traffic types (services). The traffic type may be at least one of a communication requirement (requirement for latency, error rate, or the like), a data type (voice, data, or the like), or a parameter (Modulation and Coding Scheme (MCS) table, RNTI, or the like) used for transmission. The traffic type may be V2X, URLLC, eMMB, voice (voice communication), or the like. The different traffic types may be identified by a higher layer or the like. As a result, the UE can use different CG resources for transmission of the different traffic types. If reliability, latency, or the like differs between the plurality of CG configurations, the UE can use CG configurations suitable for the traffic types.

Different logical channels may be mapped to different CG configurations. Logical channel mapping rules (priorities) may differ between the plurality of CG configurations. The logical channel may include, for example, at least one of a Dedicated Traffic Channel (DTCH), a Dedicated Control Channel (DCCH), a Common Control Channel (CCCH), a Paging Control Channel (PCCH), or a Broadcast Control Channel (BCCH). If the reliability, latency, or the like differs between the plurality of CG configurations, the UE can use CG configurations suitable for the logical channels.

A plurality of different CG configurations is configured, whereby the UE may perform CG transmission that simultaneously meets requirements of different traffic types.

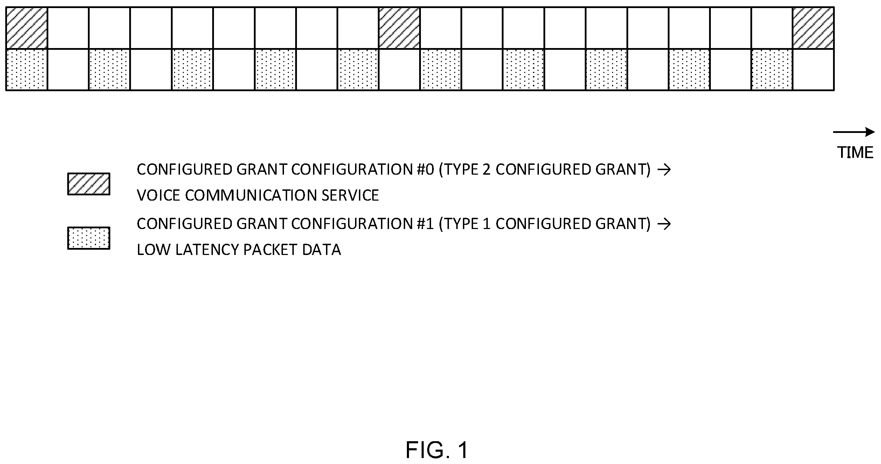

Fig. 1 is a diagram illustrating an example of the CG configuration for the use case 1. CG configurations (configured grant composition) #0 and #1 are configured to the UE. The CG configuration #0 is a type 2 CG configuration for voice communication service. The CG configuration #1 is a type 1 CG configuration for low latency packet data. A period of the CG configuration #1 may be shorter than a period of the CG configuration #0.

When UL data occurs, the UE may transmit a PUSCH by using the CG configuration according to the traffic type of UL data.

Such a plurality of different CG configurations can be adapted to different traffic types. Furthermore, parameters of Multiple Input Multiple Output (MIMO), MCS, Random Access (RA), and the like can be made separate across the plurality of CG configurations.

<<Use case 2>>

A plurality of CG configurations having different transmission start timings is configured to the UE, whereby the UE reduces the latency and secures the number of repeated transmissions (repetition K).

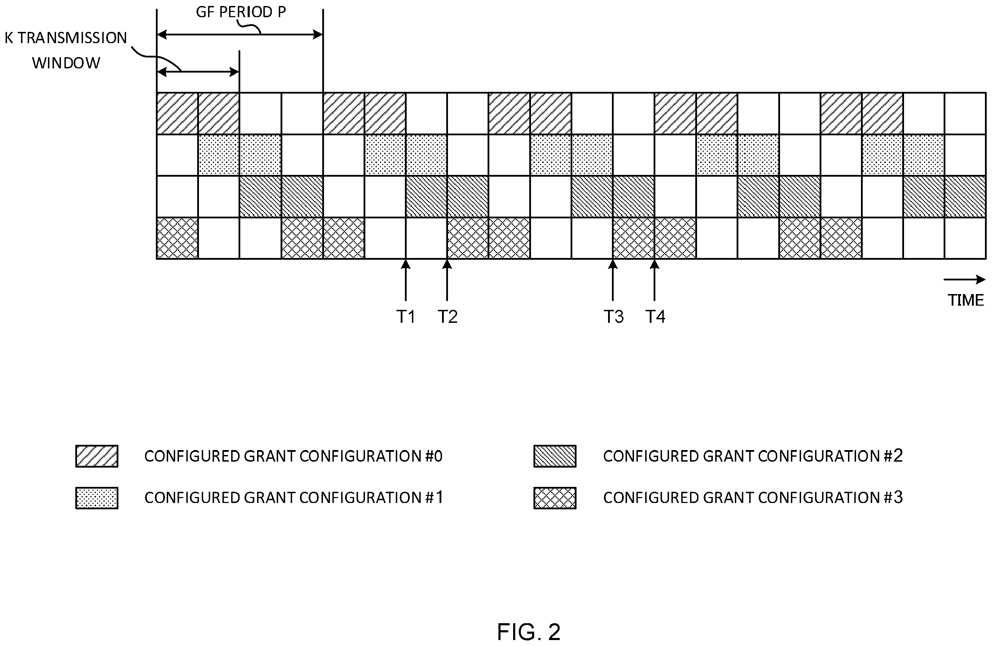

Fig. 2 is a diagram illustrating an example of the CG configuration for the use case 2. CG configurations (configured grant composition) #0 to #3 are configured to the UE. Transmission timings of the CG configurations #0 to #3 are different from each other.

The CG configurations #0 to #3 have common configurations other than the transmission timings. Since a Grant Free (GF) period P is 4, a PUSCH resource is allocated for the UE for each four transmission time units (for example, slot, mini slot). Since a repetition factor K is 2, the UE performs repeated transmissions over two transmission time units (K transmission window).

Type 1 CG configurations #0 to #3 are configured to the UE by higher layer signaling, or type 2 CG configurations #0 to #3 are configured to the UE by higher layer signaling, and the type 2 CG configurations #0 to #3 are activated by DCI. The UE waits for occurrence of UL data in a state where the type 1 CG configurations #0 to #3 are configured or in a state where the type 2 CG configurations #0 to #3 are activated.

The UE may select any CG configuration, for example, a CG configuration by which the UL data can be transmitted earliest, from among the CG configurations #0 to #3 depending on a UL data occurrence timing or a UL data transmission ready timing, and may use the selected CG configuration for PUSCH transmission.

For example, when UL data transmission occurs or preparation for the UL data transmission is completed during a period from T1 to T2, the UE may transmit the UL data by using the CG configuration #3. For example, when UL data transmission occurs or preparation for the UL data transmission is completed during a period from T3 to T4, the UE may transmit the UL data by using the CG configuration #0.

When only the CG configuration #0 is configured to the UE, only transmission occasion of one transmission time unit appears for every four transmission time units. Although reliability can be improved by repetition of twice, the latency from the generation of the UL data to the transmission is increased since the period of CG transmission cannot be made shorter than a time length of the repetition. Meanwhile, when the CG configurations #0 to #3 are configured to the UE, the transmission occasion increases, so that a low latency transmission resource can be used regardless of the UL data generation timing. That is, with the CG configurations #0 to #3, the reliability can be improved by repetition, and also the latency can be suppressed to be equivalent to making the CG transmission period shorter than the time length of the repetition.

<Identification of CG configuration/CG configuration group>

To identify a plurality of CG configurations, a CG configuration or a CG configuration group may include a configuration index. The CG configuration group may include at least one CG configuration. The CG configuration group may include a CG configuration group index, and the CG configuration in the CG configuration group may include a CG configuration.

The CG configuration group (CG configuration set, CG configuration list) may be configured to the UE by higher layer signaling such as RRC signaling.

The UE may be notified of at least one CG configuration group by higher layer signaling. The CG configuration group may be an RRC Information Element capable of storing one or a plurality of CG configurations. The CG configuration group may be identified by a configuration index or may be identified by a configuration group index. The CG configuration in the CG configuration group may be identified by the configuration index.

At least one of a maximum number of CG configuration groups, a maximum number of CG configurations for each CG configuration group, or a maximum number of all the CG configurations included in all the CG configuration groups may be specified in a specification, or may be based on the terminal capability information reported from the UE.

<Activation/deactivation of type 2 CG configuration>

For the given BWP or carrier, one or more pieces of DCI having a CRC scrambled by a specific RNTI activates or deactivates a plurality of type 2 CG configurations. The UE receives the DCI having the CRC scrambled by the specific RNTI for the given BWP or carrier, the DCI activating or deactivating one or more type 2 CG configurations. The specific RNTI may be a Configured Scheduling (CS)-RNTI.

A plurality of pieces of DCI activate the plurality of type 2 CG configurations, respectively. In this case, a plurality of specific RNTIs respectively used for scrambling CRCs of the plurality of pieces of DCI may be the same or different.

One piece of DCI may activate one CG configuration group including the plurality of type 2 CG configurations. In this case, the CG configuration group may include one specific RNTI used for scrambling the CRC of the DCI for activation.

<Common parameters for plurality of CG configurations>

In the given BWP or carrier, at least one parameter value in a plurality of CG configurations (or a plurality of CG configurations in one CG configuration group) may be common. A common parameter (common CG configuration) for the plurality of CG configurations and a separate parameter (separate CG configuration) for each CG configuration may be configured to the UE, in the given BWP or carrier. The UE may be notified of the common parameter by at least one of Radio Resource Control (RRC) signaling, MAC CE, or DCI. The UE may be notified of the separate parameter by at least one of RRC signaling, MAC CE, or DCI.

The common parameter may be the repetition factor K, MCS table, transform precoding, resource allocation (resource allocation type and resource block group granularity of frequency domain resource allocation, and actual resource allocation, time domain resource allocation), or the like.

For use case 2, repetition having different start timings depending on each of the plurality of CG configurations may be configured to the UE. The plurality of CG configurations may be configured to the UE including at least the common parameter (period, time length, repetition factor, or the like) and the separate parameter (time offset (transmission start timing, transmission occasion)) different for each CG configuration.

(Aspect 1)

A parameter may be specified for supporting a plurality of CG configurations. The parameter may be used for the use case 2. The UE may receive configuration information including the parameter. The configuration information may be at least one of higher layer signaling (PUSCH configuration information (PUSCH-Config), configured grant configuration information (ConfiguredGrantConfig), or the like), MAC CE, or DCI.

The parameter may be at least one of the following parameters 1 to 3.

<Parameter 1>

A HARQ process ID offset (for example, harq-ProcID-offset) for derivation of the HARQ process ID may be configured to the UE, for at least one CG configuration (or at least one CG configuration in one CG configuration group) .

The UE may be notified of the HARQ process ID offset by RRC signaling, may be notified of the HARQ process ID offset by the MAC CE, or may be notified of the HARQ process ID offset by the DCI (for example, DCI for type 2 CG activation).

Each of the plurality of CG configurations may include a HARQ process ID offset. Each of the plurality of CG configurations in one CG configuration group may include a HARQ process ID offset. One CG configuration group may include one HARQ process ID offset common to the plurality of CG configurations in the CG configuration group.

The UE may determine the HARQ process ID based on a time resource (time unit number) of CG transmission. A time unit may be a Transmission Time Interval (TTI) (subframe), a short TTI (sTTI) (slot, sub-slot, mini slot), an OFDM symbol, or the like.

When the HARQ process ID offset for the CG configuration is not configured to the UE, the UE may determine the HARQ process ID for the CG configuration on the basis of the time unit number, a UL transmission interval, the number of HARQ processes, and the like.

The time unit number may be a TTI number (CURRENT_TTI) or the like. The UL transmission interval may be a UL semi-persistent scheduling (CG transmission) interval (semiPersistSchedIntervalUL), a UL semi-persistent scheduling (CG transmission) interval for sTTI (semiPersistSchedIntervalUL-STTI), or the like. The number of HARQ processes may be the number of HARQ processes (numberOfConfUlSPS-Processes) configured for UL semi-persistent scheduling (CG), the number of HARQ processes (numberOfConfUl-SPS-Processes-STTI) configured for UL semi-persistent scheduling (CG) for sTTI, or the like.

For example, when the HARQ process ID offset for the CG configuration is not configured to the UE, the UE may obtain the HARQ process ID as in the following equations.

If the TTI is a subframe TTI:

```
HARQ process ID =

[floor(CURRENT_TTI/semiPersistSchedIntervalUL)] modulo

numberOfConfUlSPS-Processes
```

Here, CURRENT_TTI = [(SFN*10) + subframe number]

If not:

```
HARQ process ID =

[floor(CURRENT_TTI/semiPersistSchedIntervalUL-sTTI)] modulo

numberOfConfUlSPS-Processes-sTTI
```

Here, CURRENT_TTI = [(SFN*10*sTTI_Number_Per_Subframe) + subframe number*sTTI_Number_Per_Subframe + sTTI_number]

When the HARQ process ID offset for the CG configuration is configured to the UE, the UE may determine the HARQ process ID for the CG configuration on the basis of the time unit number, the UL transmission interval, the number of HARQ processes, the HARQ process ID offset, and the like. For example, the UE may obtain the HARQ process ID as in the following equation.

If the TTI is a subframe TTI:

$$\text{HARQ process ID} =$$

$$[\text{floor}(\text{CURRENT\_TTI/semiPersistSchedIntervalUL})] \text{ modulo}$$

$$\text{numberOfConfUlSPS-Processes} + \text{harq-ProcID-offset}$$

Here, CURRENT_TTI = [(SFN*10) + subframe number]

If not:

$$\text{HARQ process ID} =$$

$$[\text{floor}(\text{CURRENT\_TTI/semiPersistSchedIntervalUL-sTTI})] \text{ modulc}$$

$$\text{numberOfConfUlSPS-Processes-sTTI} + \text{harq-ProcID-offset}$$

$$\text{Here, CURRENT\_TTI} =$$

$$[(\text{SFN*10*sTTI\_Number\_Per\_Subframe}) + \text{subframe}$$

$$\text{number*sTTI\_Number\_Per\_Subframe} + \text{sTTI\_number}]$$

In the use case 2, a HARQ process ID offset that cancels difference in transmission timing for the plurality of CG configurations having different transmission timings, may be configured to the UE. In this case, the UE can use the same HARQ process ID for the plurality of CG configurations. The UE can be managed with use of the same HARQ process regardless of the transmission timing used for actual PUSCH transmission.

In the use case 2, the HARQ process ID offset does not have to be configured to the UE for the plurality of CG configurations having different transmission timings, or the same HARQ process ID offset may be configured to the UE. In this case, the UE can use different HARQ process IDs for the plurality of CG configurations.

<Parameter 2>

A start time offset for derivation of the PUSCH transmission start time for at least one CG configuration (or at least one CG configuration in one CG configuration group) may be configured to the UE.

The start time offset may be configured to the UE for the use case 2, or the start time offset may be configured to the UE for the type 2 CG.

The UE may be notified of the start time offset by RRC signaling, may be notified of the start time offset by the MAC CE, or may be notified of the start time offset by the DCI (for example, DCI for type 2 CG activation).

Each of the plurality of CG configurations may include a start time offset. Each of the plurality of CG configurations in one CG configuration group may include a start time offset. One CG configuration group may include one start time offset common to the plurality of CG configurations in the CG configuration group.

For example, four type 2 CG configurations may be configured to the UE by higher layer signaling, and the UE may receive one piece of DCI that simultaneously activates the four CG configurations.

The DCI may include a Time domain resource assignment field. A value m of the Time domain resource assignment field may provide a row index m+1 of a PUSCH time domain resource allocation table. In other words, values 0, 1,... in the Time domain resource assignment field may indicate the row indexes 1, 2,... in the PUSCH time domain resource allocation table. The PUSCH time domain resource allocation table may be configured to the UE by higher layer signaling, or specified in the specification.

Each row in the PUSCH time domain resource allocation table may include at least one of a slot offset K2, a Start and Length Indicator Value (SLIV), a start time (for example, a start symbol S), a duration (for example, number of symbols L), or a PUSCH mapping type.

K2 may be a slot offset of a PUSCH transmission slot to a slot having scheduling DCI. The start symbol S may be a PUSCH start symbol from the start of the PUSCH slot. The number of symbols L may be the number of consecutive symbols from the start symbol S. The PUSCH mapping type may indicate a type A or a type B.

Here, a start timing (for example, slot) determined by the Time domain resource assignment field is defined as T.

As start time offsets for N CG configurations, delta0, delta1,... delta(N-1) are configured to the UE, respectively.

For example, delta0, delta1, delta2, and delta3 are configured to the UE as start time offsets for the four CG configurations, respectively. In this case, a PUSCH start timing based on the first CG configuration may be T + delta0, a PUSCH start timing based on the second CG configuration may be T + delta1, a PUSCH start timing based on the third CG configuration may be T + delta2, and a PUSCH start timing based on the fourth CG configuration may be T + delta3.

A start time offset for one CG configuration group may be configured to the UE.

For example, one CG configuration group including four CG configurations is configured to the UE, and a start time offset delta for one CG configuration group is configured to the UE. In this case, the PUSCH start timing based on the first CG configuration may be T, the PUSCH start timing based on the second CG configuration may be T + delta, the PUSCH start timing based on the third CG configuration may be T + 2*delta, and the PUSCH start timing based on the fourth CG configuration may be T + 3*delta.

Furthermore, for example, CG configuration indexes 0, 1, 2, and 3 may be given to the four CG configurations, respectively, and the start timing of each CG configuration may be T + delta*(CG configuration index). In this case, the PUSCH start timing based on the first CG configuration (CG configuration index = 0) may be T + delta*0, the PUSCH start timing based on the second CG configuration (for example, CG configuration index = 1) may be T + delta*1, the PUSCH start timing based on the third CG configuration (for example, CG configuration index = 2) may be T + delta*2, and the PUSCH start timing based on the fourth CG configuration (for example, CG configuration index = 3) may be T + delta*3.

Even when at least some parameters of the CG configuration are common between the plurality of CG configurations for the use case 2, the UE is notified of the start time offset, whereby the PUSCH start timings based on each CG configuration can be made different from each other.

With use of the start time offset, time domain allocation parameters for CG configuration (higher layer parameter timeDomainOffset, timeDomainAllocation, Time domain resource assignment field in DCI) can be made common between the plurality of CG configurations.

When each of the plurality of CG configurations includes a start time offset, other parameters are made common between the plurality of CG configurations, whereby overhead of configuration of the parameter can be suppressed.

When one CG configuration group includes one start time offset, it is not necessary to configure a plurality of the start time offsets, so that overhead of configuration of the start time offset can be suppressed.

<Parameter 3>

A transmission power control (TPC) index for identification of TPC may be configured to the UE for at least one CG configuration (or at least one CG configuration in one CG configuration group).

The UE may be notified of the TPC index by RRC signaling, may be notified of the TPC index by the MAC CE, or may be notified of the TPC index by the DCI (for example, DCI for type 2 CG activation).

Each of the plurality of CG configurations may include the same TPC index. Each of the plurality of CG configurations in one CG configuration group may include the same TPC index. One CG configuration group may include one TPC index common to the plurality of CG configurations in the CG configuration group.

Moreover, a specific DCI format (for example, DCI format 2_2) used for transmission of a TPC command for PUCCH or PUSCH may include the TPC index. The specific DCI format may be a DCI format having a CRC scrambled by a specific RNTI (for example, TPC-PUSCH-RNTI, TPC-PUCCH-RNTI). The TPC index in the specific DCI format may indicate which CG configuration or which CG configuration group the TPC command in the specific DCI format is applied to.

A plurality of CG configurations for one serving cell may be configured to the UE, one TPC index common to the plurality of CG configurations may be configured to the UE, and the UE may receive a specific DCI format including the TPC index. In this case, the UE may apply the TPC command in the specific DCI format to PUSCH transmission based on the CG configuration corresponding to the TPC index.

When the UE receives the specific DCI format including the TPC index, the UE may apply the TPC command in the specific DCI format to PUSCH transmission based on all the CG configurations regarding one TRP of one serving cell out of the plurality of CG configurations corresponding to the TPC index.

In the use case 2, a plurality of CG configurations is configured to the UE to increase the transmission occasion, so that it is not necessary to perform transmission power control separately for the plurality of CG configurations.

One TPC index for the plurality of CG configurations is configured, whereby the same TPC command can be applied to the plurality of CG configurations, and overhead of the TPC command (DCI) can be suppressed.

Note that, the TPC index may be the configuration index. In this case, the UE may apply the TPC command in the specific DCI format to PUSCH transmission based on the CG configuration corresponding to the configuration index in the specific DCI format received.

Note that, a specific RNTI (for example, TPC-PUSCH-RNTI) may be used instead of the TPC index. For example, a plurality of CG configurations for one serving cell may be configured to the UE, one specific RNTI common to the plurality of CG configurations may be configured to the UE, and the UE may receive a specific DCI format having a CRC scrambled with use of the specific RNTI. In this case, the UE may apply the TPC command in the specific DCI format to PUSCH transmission based on the CG configuration corresponding to the specific RNTI.

(Aspect 2)

A parameter (common parameter) common between a plurality of CG configurations, or a parameter (separate parameter) separate between the plurality of CG configurations may be configured to the UE. The CG configuration for use case 2 may include the common parameter.

Since the following parameters do not have to be different between the plurality of CG configurations, the parameters may be configured as common parameters, which are: dataScramblingIdentityPUSCH indicating an identifier used for initialization of data scrambling for PUSCH; txConfig indicating whether the UE uses codebook-based transmission or non-codebook-based transmission; codebookSubset indicating a subset of a PMI handled by a Transmitted Precoding Matrix Indicator (TMPI); maxRank indicating a subset of a PMI used by a Transmitted Rank Indicator (TRI); rbg-Size; frequencyHopping; resourceAllocation; pusch-TimeDomainAllocationList indicating a list for time domain allocation for a timing of UL allocation to UL data; pusch-AggregationFactor (repK) indicating the number of repetitions of data; repK-RV indicating a Redundancy Version (RV) used; mcs-Table indicating an MCS table used by the UE for PUSCH without transform precoding (DFT-s-OFDM); mcs-TableTransformPrecoder indicating an MCS table used by the UE for PUSCH with transform precoding; transformPrecoder indicating whether or not to activate transform precoding for type 1 and type 2; tp-pi2BPSK indicating activation of n/2-BPSK with transform precoding; uci-OnPUSCH (CG-UCI-OnPUSCH) indicating selection of dynamic and semi-static beta offsets; scaling indicating s scaling factor that limits the number of resource elements allocated to UCI on PUSCH; nrofHARQ-Processes indicating the number of HARQ processes configured; periodicity indicating a period for UL transmission without UL grant for type 1 and type 2; configuredGrantTimer indicating an initial value of a configured grant timer; timeDomainAllocation indicating a combination of a start symbol, length, and a PUSCH mapping type; frequencyDomainAllocation indicating frequency domain allocation in a Physical Resource Block (PRB); mcsAndTBS indicating a modulation order, a target code rate, and a transport block (TB) size; frequencyHoppingOffsetLists (frequencyHoppingOffset) indicating activation of an intra-slot frequency offset having a given frequency hopping offset; tpc-Accumulation indicating activation for the UE to apply a TPC commands via accumulation; p0-NominalWithoutGrant indicating a P0 value for UL grant-free based PUSCH; P0-PUSCH-Alpha indicating an index of P0-PUSCH-AlphaSet used for this configuration; powerControlLoopToUse indicating a closed control loop to be applied; PUSCH-PathlossReferenceRS indicating a set of reference signals used for PUSCH path loss estimation; deltaMCS indicating whether to apply a deltaMCS; and SRI-PUSCH-PowerControl indicating a set of PUSCH power control parameters associated with one SRS Resource Indicator (SRI).

Since the following parameters may have different values between the plurality of CG configurations, the parameters may be configured as separate parameters, which are: DMRS-UplinkConfig (cg-DMRS-Configuration) indicating a configuration of a UL DMRS for PUSCH; antennaPort indicating an antenna port used for this configuration; dmrs-SeqInitialization configured when tranformPrecoder is disabled; precodingAndNumberOfLayers regarding precoding and the number of layers; and srs-ResourceIndicator indicating an SRS resource used.

For example, the DMRS-UplinkConfig is preferably a separate parameter since the position and number of DMRS to be inserted may differ depending on the transmission timing.

The timeDomainOffset indicating an offset (slot offset) regarding a System Frame Number (SFN) = 0 may be configured as a separate parameter in the type 1 CG configuration. Furthermore, the timeDomainOffset may be configured as a common parameter in the type 2 CG configuration. In this case, the timeDomainOffset (slot offset) and the timeDomainAllocation (symbol offset) may be common parameters. The UE may make transmission start timings of a plurality of PUSCH transmissions respectively based on a plurality of type 2 CG configurations different from each other on the basis of the start time offset.

The RNTI and TPC index do not have to be different between the plurality of CG configurations, and may be configured as common parameters.

The configuration index, the HARQ process ID offset, and the start time offset may be configured as separate parameters or as common parameters.

For example, when the configuration index is a separate parameter, other separate parameters different depending on the CG configuration can be configured to the UE. For example, when the configuration index is a common parameter, the UE can configure a CG configuration group and can configure a common parameter for a plurality of CG configurations included in the CG configuration group.

For example, by configuring the HARQ process ID offset separately for the plurality of CG configurations, it is possible to make HARQ process IDs for the plurality of CG configurations having different transmission timings equal to each other. For example, by configuring the HARQ process ID offset in common for the plurality of CG configurations, it is possible to make the HARQ process IDs for the plurality of CG configurations having different transmission timings different from each other.

For example, by configuring the start time offset separately for the plurality of CG configurations, it is possible to configure different transmission timings for the plurality of CG configurations. For example, by configuring the start time offset in common for the plurality of CG configurations, it is possible to configure different transmission timings at equal intervals for the plurality of CG configurations.

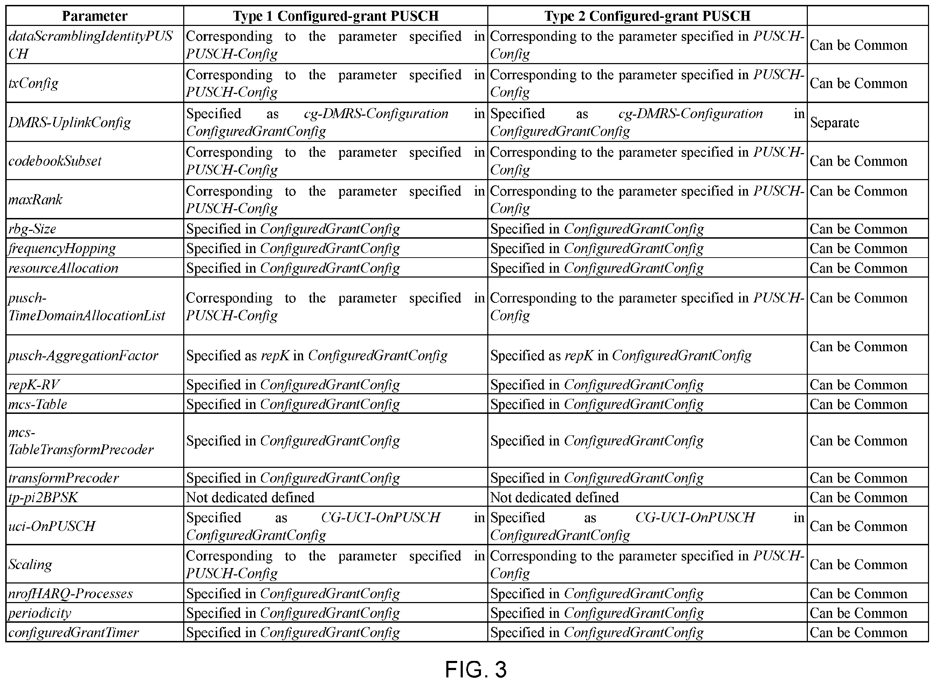

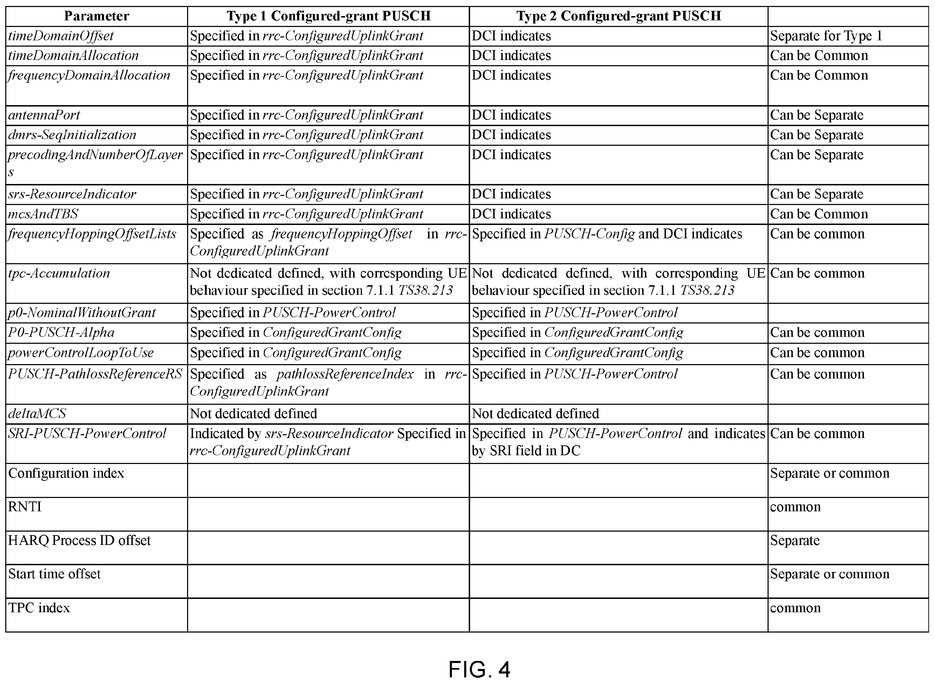

Figs. 3 and 4 are diagrams illustrating examples of the common parameters and the separate parameters.

The dataScramblingIdentityPUSCH, txConfig, codebookSubset, maxRank, pusch-TimeDomainAllocationList, and scaling may be included in the PUSCH configuration information (PUSCH-Config).

The rbg-Size, frequencyHopping, resourceAllocation, pusch-AggregationFactor, repK-RV, mcs-Table, mcs-TableTransformPrecoder, transformPrecoder, uci-OnPUSCH, nrofHARQ-Processes, periodicity, configuredGrantTimer, frequencyHoppingOffsetLists, P0-PUSCH-Alpha, and powerControlLoopToUse may be included.

Parameters timeDomainOffset, timeDomainAllocation, frequencyDomainAllocation, antennaPort, dmrs-SeqInitialization, precodingAndNumberOfLayers, srs-ResourceIndicator, mcsAndTBS may be included in the type 1 CG configuration information (rrc-ConfiguredUplinkGrant) in the CG configuration information, or may be included in activation DCI for the type 2CG.

The p0-NominalWithoutGrant may be included in the PUSCH power control information (PUSCH-PowerControl) in the PUSCH configuration information.

The PUSCH-PathlossReferenceRS (pathlossReferenceIndex) may be included in the type 1 CG configuration information in the CG configuration information, or may be included in the PUSCH power control information in the PUSCH configuration information for the type 2 CG. The SRI-PUSCH-PowerControl (srs-ResourceIndicator) may be included in the type 1 CG configuration information in the CG configuration information, or may be included in the PUSCH power control information in the PUSCH configuration information for the type 2 CG, and may be indicated by an SRI field in DCI.

The tp-pi2BPSK, tpc-Accumulation, and deltaMCS do not have to be configured individually for each UE.

Common parameters for the plurality of CG configurations are configured to the UE, whereby overhead of the plurality of CG configurations can be suppressed. When a plurality of CG configurations different only in transmission timings is configured as in the use case 2, the UE can use common parameters in the plurality of CG configurations (CG configuration group).

(Radio Communication System)

Hereinafter, a configuration is described of a radio communication system according to an embodiment of the present disclosure. In this radio communication system, communication is performed using one or a combination of the radio communication methods according to the embodiments of the present disclosure.

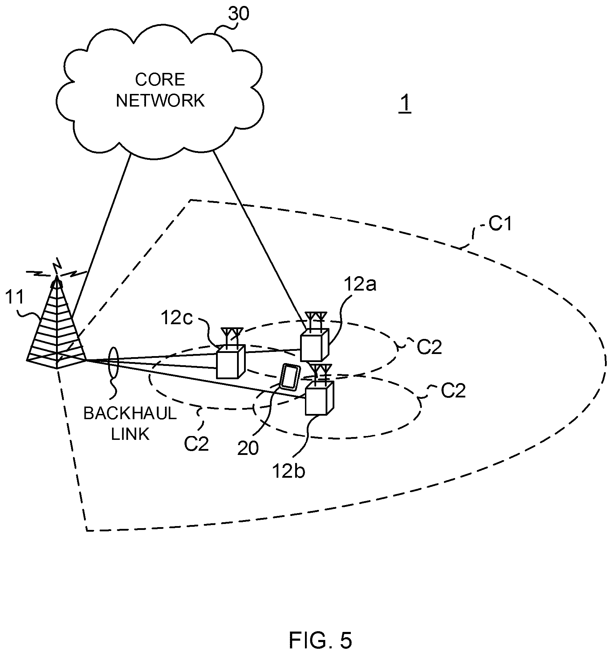

Fig. 5 is a diagram illustrating an example of a schematic configuration of the radio communication system according to an embodiment. A radio communication system 1 may be a system that implements communication using Long Term Evolution (LTE), 5th generation mobile communication system New Radio (5G NR), and the like specified by Third Generation Partnership Project (3GPP).

Furthermore, the radio communication system 1 may support dual connectivity (multi-Radio Access Technology (RAT) Dual Connectivity (MR-DC)) between a plurality of RATs. The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In EN-DC, an LTE (E-UTRA) base station (eNB) is a Master Node (MN), and an NR base station (gNB) is a Secondary Node (SN). In NE-DC, an NR base station (gNB) is MN, and an LTE (E-UTRA) base station (eNB) is SN.

The radio communication system 1 may support dual connectivity between a plurality of base stations in identical RAT (for example, dual connectivity in which both MN and SN are NR base stations (gNB) (NR-NR Dual Connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be located in at least one cell. The arrangement, number, and the like of cells and the user terminals 20 are not limited to the aspect illustrated in the drawing. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of Carrier Aggregation (CA) and Dual Connectivity (DC) using a plurality of Component Carriers (CC).

Each CC may be included in at least one of a Frequency Range 1 (FR1) or a Frequency Range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that, the frequency ranges, definitions, and the like of the FR1 and FR2 are not limited to these, and for example, the FR1 may be a frequency range higher than the FR2.

Furthermore, the user terminal 20 may perform communication in each CC by using at least one of Time Division Duplex (TDD) or Frequency Division Duplex (FDD).

The plurality of base stations 10 may be connected to each other by wire (for example, an optical fiber or an X2 interface, or the like in compliance with Common Public Radio Interface (CPRI)) or by radio (for example, NR communication). For example, when NR communication is used as a backhaul between the base stations 11 and 12, the base station 11 corresponding to a higher-level station may be referred to as an Integrated Access Backhaul (IAB) donor, and the base station 12 corresponding to a relay station (relay) may be referred to as an IAB node.

A base station 10 may be connected to a core network 30 via another base station 10 or directly. The core network 30 may include, for example, at least one of Evolved Packet Core (EPC), 5G Core Network (5GCN), Next Generation Core (NGC), or the like.

The user terminal 20 may correspond to at least one of communication methods such as LTE, LTE-A, and 5G.

In the radio communication system 1, an Orthogonal Frequency Division Multiplexing (OFDM)-based radio access method may be used. For example, in at least one of Downlink (DL) or Uplink (UL), Cyclic Prefix OFDM (CP-OFDM), Discrete Fourier Transform Spread OFDM (DFT-s-OFDM), orthogonal Frequency Division Multiple Access (OFDMA), Single Carrier Frequency Division Multiple Access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, as a downlink channel, a Physical Downlink Shared Channel (PDSCH) shared by the user terminals 20, a Physical Broadcast Channel (PBCH), a Physical Downlink Control Channel (PDCCH), or the like may be used.

Furthermore, in the radio communication system 1, as an uplink channel, a Physical Uplink Shared Channel (PUSCH) shared by the user terminals 20, a Physical Uplink Control Channel (PUCCH), a Physical Random Access Channel (PRACH), or the like may be used.

User data, higher layer control information, a System Information Block (SIB), and the like are transmitted by the PDSCH. User data, higher layer control information, and the like may be transmitted by the PUSCH. Furthermore, a Master Information Block (MIB) may be transmitted by the PBCH.

Lower layer control information may be transmitted by the PDCCH. The lower layer control information may include, for example, Downlink Control Information (DCI) including scheduling information of at least one of the PDSCH and the PUSCH.

Note that, the DCI that schedules the PDSCH may be referred to as DL assignment, DL DCI, and the like, and the DCI that schedules the PUSCH may be referred to as UL grant, UL DCI, and the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or a plurality of search spaces. The UE may monitor the CORESET associated with a certain search space on the basis of search space configuration.

One SS may correspond to a PDCCH candidate corresponding to one or a plurality of aggregation Levels. One or a plurality of search spaces may be referred to as a search space set. Note that, "search space", "search space set", "search space configuration", "search space set configuration", "CORESET", "CORESET configuration", and the like in the present disclosure may be replaced with each other.

Channel state information (CSI), delivery confirmation information (which may be referred to as, for example, hybrid automatic repeat request acknowledgement (HARQ-ACK), ACK/NACK, or the like), Scheduling Request (SR), and the like may be transmitted by the PUCCH. A random access preamble for establishing a connection with a cell may be transmitted by the PRACH.

Note that, in the present disclosure, downlink, uplink, and the like may be expressed without adding "link". Furthermore, various channels may be expressed without adding "physical" at the beginning thereof.

In the radio communication system 1, a Synchronization Signal (SS), a Downlink Reference Signal (DL-RS), and the like may be transmitted. In the radio communication system 1, a Cell-specific Reference Signal (CRS), a Channel State Information Reference Signal (CSI-RS), a demodulation reference signal (DMRS), a Positioning Reference Signal (PRS), a Phase Tracking Reference Signal (PTRS), and the like may be transmitted as the DL-RS.

The synchronization signal may be, for example, at least one of a Primary Synchronization Signal (PSS) and a Secondary Synchronization Signal (SSS). A signal block including the SS (PSS or SSS) and the PBCH (and the DMRS for the PBCH) may be referred to as an SS/PBCH block, an SSB (SS Block), and the like. Note that, the SS, the SSB, or the like may also be referred to as a reference signal.

Furthermore, in the radio communication system 1, a Sounding Reference Signal (SRS), a Demodulation Reference Signal (DMRS), and the like may be transmitted as an Uplink Reference Signal (UL-RS). Note that, the DMRS may be referred to as a user terminal-specific reference signal (UE-specific Reference Signal)".

(Base Station)

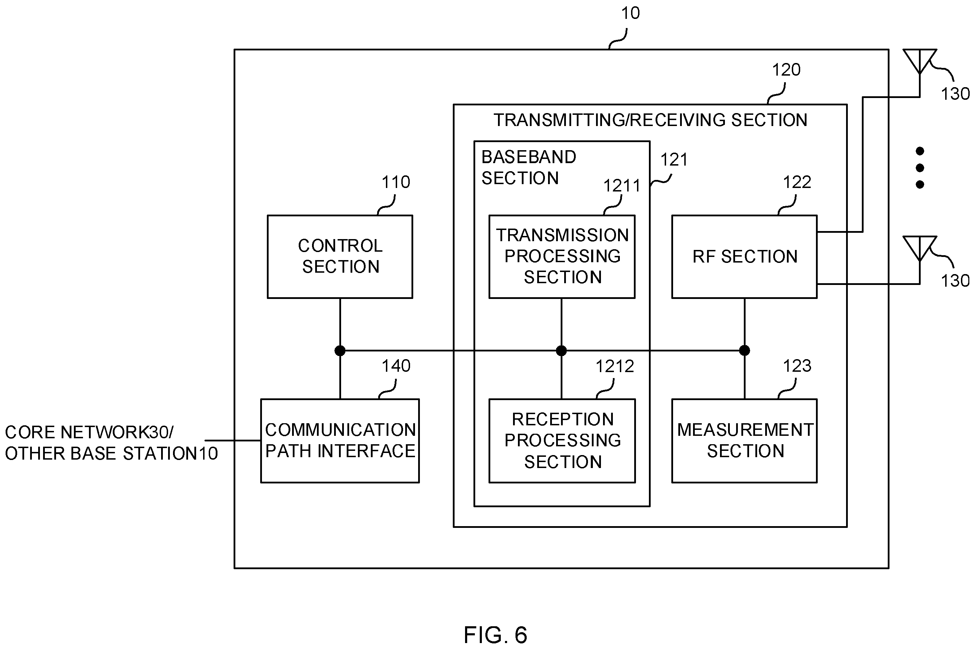

Fig. 6 is a diagram illustrating an example of a configuration of a base station according to an embodiment. The base station 10 includes a control section 110, a transmitting/receiving section 120, a transmission/reception antenna 130, and a communication path interface 140. Note that, one or more each of the control sections 110, the transmitting/receiving sections 120, the transmission/reception antennas 130, and the communication path interfaces 140 may be included.

Note that, although this example mainly describes functional blocks of a characteristic part of the present embodiment, it may be assumed that the base station 10 includes other functional blocks that are necessary for radio communication as well. A part of processing of each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the communication path interface 140. The control section 110 may generate data, control information, a sequence, and the like to be transmitted as signals, and transfer the data, control information, sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be formed as an integrated transmitting/receiving section, or may include a transmitting section and a reception section. The transmitting section may include the transmission processing section 1211 and the RF section 122. The receiving section may include the reception processing section 1212, the RF section 122, and the measurement section 123.

The transmission/reception antenna 130 can include an antenna described on the basis of common recognition in the technical field related to the present disclosure, for example, an array antenna, and the like.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform Packet Data Convergence Protocol (PDCP) layer processing, Radio Link Control (RLC) layer processing (for example, RLC retransmission control), Medium Access Control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, Discrete Fourier Transform (DFT) processing (if necessary), Inverse Fast Fourier Transform (IFFT) processing, precoding, digital-analog conversion, and the like on the bit string to be transmitted, to output a baseband signal.

The transmitting/receiving section 120 (RF section 122) may perform modulation to a radio frequency range, filtering processing, amplification, and the like on the baseband signal, to transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital conversion, Fast Fourier Transform (FFT) processing, Inverse Discrete Fourier Transform (IDFT) processing (if necessary), filtering processing, demapping, demodulation, decoding (which may include error correction decoding), MAC layer processing, RLC layer processing, or PDCP layer processing, and the like on the acquired baseband signal, to acquire user data and the like.

The transmitting/receiving section 120 (measurement section 123) may perform measurement on the received signal. For example, the measurement section 123 may perform Radio Resource Management (RRM) measurement, Channel State Information (CSI) measurement, and the like on the basis of the received signal. The measurement section 123 may measure received power (for example, Reference Signal Received Power (RSRP)), received quality (for example, Reference Signal Received Quality (RSRQ), Signal To Interference plus Noise Ratio (SINR), or Signal to Noise Ratio (SNR)), signal strength (for example, Received Signal Strength Indicator (RSSI)), propagation path information (for example, CSI), and the like. The measurement result may be output to the control section 110.

The communication path interface 140 may perform transmission/reception of a signal (backhaul signaling) to/from an apparatus, another base station 10, or the like included in the core network 30, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the communication path interface 140.

Note that, the transmitting/receiving section 120 may transmit a plurality of configured grant configurations to the user terminal 20 by higher layer signaling. Furthermore, the transmitting/receiving section 120 may transmit downlink control information or MAC CE for activation or deactivation of the configured grant configuration.

(User Terminal)

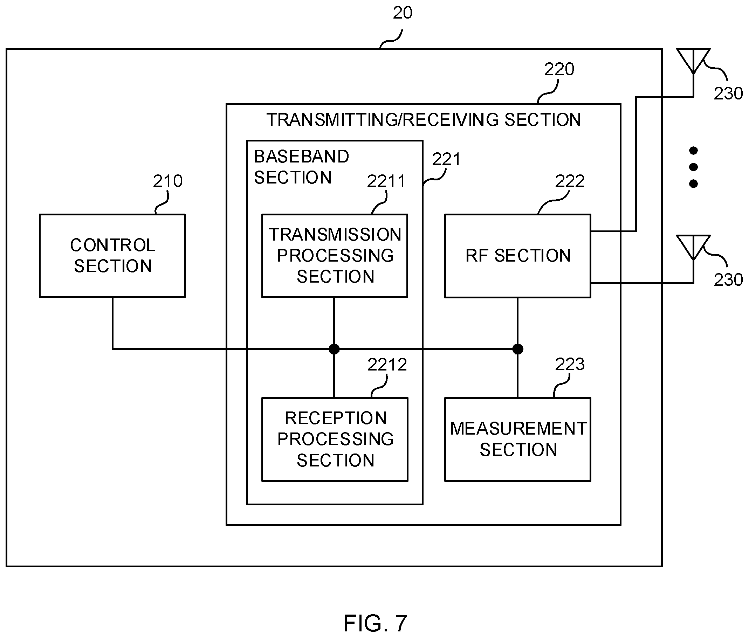

Fig. 7 is a diagram illustrating an example of a configuration of a user terminal according to an embodiment. The user terminal 20 includes a control section 210, a transmitting/receiving section 220, and a transmission/reception antenna 230. Note that, one or more each of the control sections 210, the transmitting/receiving sections 220, and the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure, for example, an array antenna, and the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined on the basis of configuration of transform precoding. If transform precoding is enabled for a channel (for example, PUSCH), the transmitting/receiving section 220 (transmission processing section 2211) may perform DFT processing as the transmission processing to transmit the channel by using a DFT-s-OFDM waveform, and if not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that, the transmitting section and the receiving section of the user terminal 20 in the present disclosure may include at least one of the transmitting/receiving section 220, the transmission/reception antenna 230, or the communication path interface 240.

Furthermore, the transmitting/receiving section 220 may receive configuration information regarding a plurality of configured grant configurations, the configuration information including at least one of a hybrid automatic repeat request (HARQ) process ID offset for derivation of a HARQ process ID of uplink data, a start time offset for derivation of a transmission start time of the uplink data, or a transmission power control (TPC) index for identification of TPC of the uplink data (at least one of higher layer signaling (PUSCH configuration information, configured grant configuration information, or the like), MAC CE, or DCI). The control section 210 may use one configured grant configuration based on an uplink data generation timing out of the plurality of configured grant configurations, for transmission (PUSCH transmission) of the uplink data, on the basis of the configuration information.

Furthermore, the configuration information may include a parameter common to the plurality of grant configurations and parameters separate from one another between the plurality of configured grant configurations.

Furthermore, the configuration information may include different HARQ process ID offsets for the respective plurality of configured grant configurations.

Furthermore, the configuration information may include either different start time offsets for the respective plurality of configured grant configurations or one start time offset for the plurality of configured grant configurations.

Furthermore, the configuration information may include either a plurality of identical TPC indexes respectively corresponding to the plurality of configured grant configurations or one TPC index for the plurality of configured grant configurations. The control section 210 may apply a TPC command included in downlink control information to a configured grant configuration corresponding to a TPC index included in the downlink control information.

(Hardware Configuration)

Note that, the block diagrams that have been used to describe the above embodiments illustrate blocks of functional units. These functional blocks (configuration sections) may be implemented by an arbitrary combination of at least one of hardware or software. Furthermore, an implementation method for each functional block is not particularly limited. That is, each functional block may be implemented by using one apparatus physically or logically aggregated, or may be implemented by directly or indirectly connecting two or more physically or logically separate apparatuses (by using wires, radio, or the like, for example) and using these plural apparatuses. The functional block may be implemented by combining the one or the plural apparatuses with software.

Here, functions include, but are not limited to, determining, determining, judging, computing, calculating, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration section) having a transmission function may be referred to as a transmitting unit, a transmitter, and the like. In any case, as described above, the implementation method is not particularly limited.

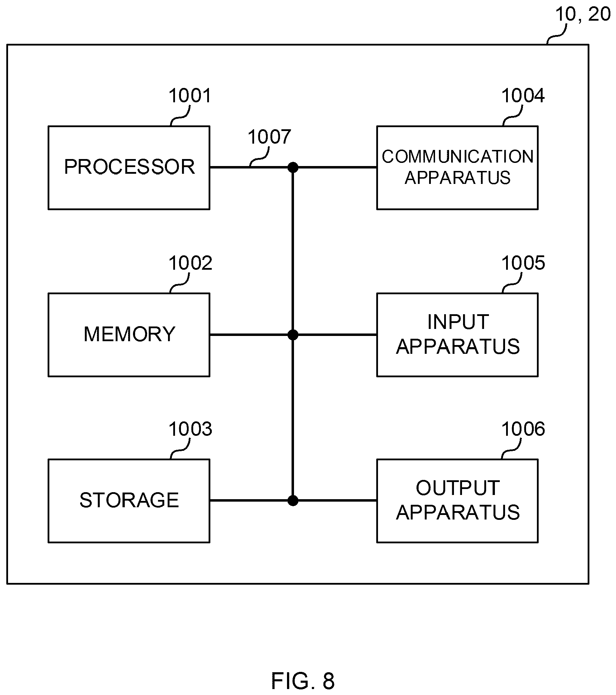

For example, the base station, the user terminal, and the like according to an embodiment of the present disclosure may function as a computer that executes the processing of the radio communication method of the present disclosure. Fig. 8 is a diagram illustrating an example of a hardware configuration of the base station and the user terminal according to an embodiment. Physically, the base station 10 and user terminal 20 described above may be formed as a computer apparatus that includes a processor 1001, a memory 1002, storage 1003, a communication apparatus 1004, an input apparatus 1005, an output apparatus 1006, a bus 1007, and the like.

Note that, in the present disclosure, the terms such as an apparatus, a circuit, a device, a section, a unit, and the like can be replaced with each other. The hardware configuration of the base station 10 and the user terminal 20 may be configured including one or a plurality of the apparatuses illustrated in the drawings, or may be configured without including some apparatuses.

For example, although only one processor 1001 is illustrated, there may be a plurality of processors. Furthermore, the processing may be executed by one processor, or the processing may be executed by two or more processors simultaneously, sequentially, or using other techniques. Note that, the processor 1001 may be implemented with one or more chips.

For example, each function of the base station 10 and user terminal 20 is implemented by causing certain software (program) to be read onto hardware such as the processor 1001 and the memory 1002, and by the processor 1001 performing arithmetic operation to control communication via the communication apparatus 1004 and control at least one of reading or writing of data in the memory 1002 and storage 1003.

The processor 1001 operates an operating system to control an entire computer, for example. The processor 1001 may include a central processing unit (CPU) including an interface with peripheral equipment, a control apparatus, an operation apparatus, a register, and the like. For example, at least a part of the control section 110 (210), transmitting/receiving section 120 (220), and the like described above may be implemented by the processor 1001.

Furthermore, the processor 1001 reads a program (program code), a software module, data, and the like from at least one of the storage 1003 or the communication apparatus 1004 into the memory 1002, and executes various types of processing in accordance with these. As the program, a program is used that causes a computer to execute at least a part of the operation described in the embodiment described above. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a register, a cache, a main memory (main storage apparatus), and the like. The memory 1002 may store a program (program code), a software module, and the like executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc (compact disc ROM (CD-ROM) and the like), a digital versatile disc, and a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as an auxiliary storage apparatus.

The communication apparatus 1004 is hardware (transmission/reception device) for performing inter-computer communication via at least one of a wired network or a radio network, and is also referred to as a network device, a network controller, a network card, a communication module, and the like, for example. The communication apparatus 1004 may include a high frequency switch, a duplexer, a filter, a frequency synthesizer, and the like to implement, for example, at least one of Frequency Division Duplex (FDD) or Time Division Duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device that receives an input from outside (for example, a keyboard, a mouse, a microphone, a switch, a button, a sensor, and the like). The output apparatus 1006 is an output device for performing output to the outside (for example, a display, a speaker, a Light Emitting Diode (LED) lamp, and the like). Note that, the input apparatus 1005 and output apparatus 1006 may have an integrated form (for example, a touch panel) .

Furthermore, apparatuses such as the processor 1001, the memory 1002, and the like are connected to each other by the bus 1007 for communicating information. The bus 1007 may be formed by using a single bus, or may be formed by using different buses for respective connections between apparatuses.

Furthermore, the base station 10 and user terminal 20 may include hardware such as a microprocessor, a Digital Signal Processor (DSP), an Application Specific Integrated Circuit (ASIC), a Programmable Logic Device (PLD), or a Field Programmable Gate Array (FPGA), and the like, and some or all of the functional blocks may be implemented by using the hardware. For example, the processor 1001 may be implemented by using at least one of these pieces of hardware.

(Variations)

Note that, terms described in the present disclosure and terms necessary for understanding the present disclosure may be replaced with other terms that have the same or similar meanings. For example, a channel, a symbol, and a signal (or signaling) may be replaced with each other. Furthermore, the signal may be a message. A reference signal can be abbreviated as an RS, and may be referred to as a pilot, a pilot signal, and the like, depending on the standard applied. Furthermore, a Component Carrier (CC) may be referred to as a cell, a frequency carrier, a carrier frequency, and the like.

A radio frame may include one or a plurality of periods (frames) in a time domain. Each of one or a plurality of periods (frames) constituting a radio frame may be referred to as a subframe. Moreover, the subframe may include one or a plurality of slots in the time domain. The subframe may have a fixed time length (for example, 1 ms) that does not depend on numerology.

Here, the numerology may be a communication parameter applied to at least one of transmission and reception of a certain signal or channel. For example, the numerology may indicate at least one of Subcarrier Spacing (SCS), a bandwidth, a symbol length, a cyclic prefix length, a Transmission Time Interval (TTI), the number of symbols per TTI, a radio frame configuration, specific filtering processing to be performed by a transceiver in a frequency domain, specific windowing processing to be performed by the transceiver in the time domain, and the like.

A slot may include one or a plurality of symbols (Orthogonal Frequency Division Multiplexing (OFDM) symbols, Single Carrier Frequency Division Multiple Access (SC-FDMA) symbols, and the like) in the time domain. Furthermore, the slot may be a time unit based on the numerology.

The slot may include a plurality of mini slots. Each mini slot may include one or a plurality of symbols in the time domain. Furthermore, a mini slot may be referred to as a sub-slot. Each mini slot may include fewer symbols than a slot. A PDSCH (or PUSCH) transmitted in a time unit larger than a mini slot may be referred to as a PDSCH (PUSCH) mapping type **A.** A PDSCH (or PUSCH) transmitted using the mini slot may be referred to as a PDSCH (PUSCH) mapping type **B.**

The radio frame, subframe, slot, mini slot, and symbol all represent a time unit when transmitting a signal. Another name may be used corresponding to each of the radio frame, subframe, slot, mini slot, symbol, and the like. Note that, the time units such as the frame, subframe, slot, mini slot, and symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe and TTI may be a subframe (1 ms) in the existing LTE, may be a period shorter than 1 ms (for example, one to thirteen symbols), or may be a period longer than 1 ms. Note that, the unit indicating the TTI may be referred to as the slot, mini slot, and the like instead of the subframe.

Here, the TTI refers to, for example, the minimum time unit of scheduling in the radio communication. For example, in LTE systems, the base station performs scheduling for allocating the radio resources (such as the frequency bandwidth and transmission power, and the like that can be used in each user terminal) to each user terminal in TTI units. Note that, definition of the TTI is not limited to this.

The TTI may be a transmission time unit of channel coded data packet (transport block), code block, codeword, and the like, or may be a processing unit of scheduling, link adaptation, and the like. Note that, when the TTI is given, a time interval (for example, the number of symbols) to which the transport block, code block, codeword, and the like are actually mapped may be shorter than the TTI.

Note that, when one slot or one mini slot is referred to as the TTI, one or more TTIs (that is, one or more slots or one or more mini slots) may be the minimum time unit of scheduling. Furthermore, the number of slots (the number of mini slots) forming the minimum time unit of the scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a sub-slot, a slot, and the like.

Note that, the long TTI (for example, the usual TTI, subframe, and the like) may be replaced with a TTI having a time length longer than 1 ms, and the short TTI (for example, the shortened TTI and the like) may be replaced with a TTI having a TTI length shorter than the TTI length of the long TTI and not shorter than 1 ms.

A Resource Block (RB) is a resource allocation unit of the time domain and frequency domain, and may include one or a plurality of consecutive subcarriers in the frequency domain. The number of subcarriers included in the RB may be the same regardless of the numerology, and may be 12, for example. The number of subcarriers included in the RB may be determined on the basis of the numerology.

Furthermore, the RB may include one or a plurality of symbols in the time domain, and have the length of one slot, one mini slot, one subframe, or one TTI. One TTI, one subframe, and the like may include one or a plurality of resource blocks.

Note that, one or a plurality of RBs may be referred to as a physical resource block (physical RB (PRB)), a SubCarrier Group (SCG), a Resource Element Group (REG), a PRB pair, an RB pair, and the like.

Furthermore, the resource block may include one or a plurality of Resource Elements (REs). For example, one RE may be a radio resource domain of one subcarrier and one symbol.

A Bandwidth Part (BWP) (which may be referred to as partial bandwidth and the like) may represent a subset of consecutive common resource blocks (RBs) for certain numerology in a certain carrier. Here, the common RB may be specified by an index of the RB based on a common reference point of the carrier. The PRB may be defined in a certain BWP and numbered within the BWP.

The BWP may include a BWP for UL (UL BWP) and a BWP for DL (DL BWP). For the UE, one or a plurality of BWPs may be configured within one carrier.

At least one of the configured BWPs may be active, and it is not necessary to assume that the UE transmits and receives a given signal/channel outside the active BWP. Note that, a cell, a carrier, and the like in the present disclosure may be replaced with a BWP.

Note that, the structures of the radio frame, subframe, slot, mini slot, symbol, and the like described above are merely examples. For example, configurations may be variously changed, such as the number of subframes included in the radio frame, the number of slots per subframe or radio frame, the number of mini slots included in the slot, the number of symbols and RBs included in the slot or mini slot, the number of subcarriers included in the RB, and the number of symbols, the symbol length, cyclic prefix (CP) length, and the like in the TTI.

Furthermore, the information and parameters described in the present disclosure may be represented in absolute values, represented in relative values with respect to given values, or represented using other corresponding information. For example, the radio resource may be indicated by a given index.

The names used for the parameters and the like in the present disclosure are not limited names in any respect. Moreover, an equation and the like using these parameters may differ from those explicitly disclosed in the present disclosure. Since various channels (Physical Uplink Control Channel (PUCCH), Physical Downlink Control Channel (PDCCH), and the like) and information elements may be identified by any suitable names, the various names allocated to these various channels and information elements are not limited names in any respect.

The information, signals, and the like described in the present disclosure may be represented using any of various different technologies. For example, the data, instruction, command, information, signal, bit, symbol, chip, and the like that may be referred to throughout the above description may be represented by the voltage, current, electromagnetic wave, magnetic field or magnetic particle, optical field or photon, or any combination thereof.

Furthermore, the information, signals, and the like may be output in at least one of a direction from a higher layer to a lower layer and a direction from the lower layer to the higher layer. The information, signals, and the like may be input and output via a plurality of network nodes.

The information, signals, and the like that are input and output may be stored in a specific location (for example, in a memory), or may be managed using a management table. The information, signals, and the like to be input and output can be overwritten, updated, or appended. The information, signals, and the like that are output may be deleted. The information, signals, and the like that are input may be transmitted to other apparatuses.

The notification of information may be performed using other methods without being limited to the aspects/embodiments described in the present disclosure. For example, the notification of information in the present disclosure may be performed by using physical layer signaling (for example, Downlink Control Information (DCI), Uplink Control Information (UCI)), higher layer signaling (for example, Radio Resource Control (RRC) signaling, broadcast information (Master Information Block (MIB), System Information Block (SIB), or the like), Medium Access Control (MAC) signaling), and another signal, or a combination thereof.

Note that, the physical layer signaling may be referred to as Layer 1/Layer 2 (L1/L2) control information (L1/L2 control signal), L1 control information (L1 control signal), and the like. Furthermore, the RRC signaling may be referred to as an RRC message, and may be, for example, an RRC Connection Setup message, an RRC Connection Reconfiguration message, and the like. Furthermore, notification of the MAC signaling may be given by using, for example, a MAC Control Element (MAC CE).

Furthermore, notification of given information (for example, notification of "being X") does not necessarily have to be explicit, and may be given implicitly (for example, by not giving notification of the given information or by notification of other information).

Judging may be performed by a one-bit value (0 or 1), by a boolean indicated by true or false, or by comparison of numerical values (for example, comparison with a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Furthermore, the software, instruction, information, and the like may be transmitted and received via transmission media. For example, when software is transmitted from a website, a server, or other remote sources by using at least one of wired technology (coaxial cable, optical fiber cable, twisted-pair, Digital Subscriber Line (DSL), and the like) or radio technology (infrared radiation, microwave, and the like), at least one of the wired technology or the radio technology is included in the definition of transmission media.

The terms "system" and "network" used in the present disclosure may be used interchangeably. The "network" may mean an apparatus (for example, a base station) included in the network.

In the present disclosure, the terms such as "precoding", "precoder", "weight (precoding weight)", "Quasi-Co-Location (QCL)", "Transmission Configuration Indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", "panel", and the like may be used interchangeably.

In the present disclosure, the terms such as "Base Station (BS)", "radio base station", "fixed station", "NodeB", "eNodeB (eNB)", "gNodeB (gNB)", "access point", "Transmission Point (TP)", "Reception Point (RP)", "Transmission/-Reception Point (TRP)", "panel", "cell", "sector", "cell group", "carrier", and "component carrier" may be used interchangeably. The base station may also be referred to by a term such as a macro cell, a small cell, a femto cell, a pico cell and the like.

The base station may accommodate one or a plurality of (for example, three) cells. When a base station accommodates a plurality of cells, the entire coverage area of the base station can be partitioned into multiple smaller areas, and a communication service can also be provided for each smaller area through base station subsystems (for example, indoor small base stations (Remote Radio Heads (RRHs))). The term "cell" or "sector" refers to all or part of the coverage area of at least one of the base station or base station subsystem that provides the communication service within this coverage.

In the present disclosure, the terms "Mobile Station (MS)", "user terminal", "User Equipment (UE)", "terminal", and the like may be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or mobile station may be referred to as a transmission apparatus, a reception apparatus, a radio communication apparatus, and the like. Note that, at least one of the base station or mobile station may be a device mounted on a moving object, a moving object itself, and the like. The moving object may be a transportation (for example, a car, an airplane, and the like), an unmanned moving object (for example, a drone, an autonomous car, and the like), or a (manned or unmanned) robot. Note that, at least one of the base station or the mobile station also includes an apparatus that does not necessarily move during a communication operation. For example, at least one of the base station or mobile station may be an Internet of Things (IoT) device such as a sensor.

Furthermore, the base station in the present disclosure may be replaced with the user terminal. For example, each aspect/embodiment of the present disclosure may be applied to a configuration in which communication between the base station and the user terminal is replaced with communication between a plurality of user terminals (which may be referred to as, for example, Device-to-Device (D2D), Vehicle-to-Everything (V2X), and the like). In this case, the user terminal 20 may have the function of the base station 10 described above. Furthermore, the terms such as "up" and "down" may be replaced with the term corresponding to the terminal-to-terminal communication (for example, "side"). For example, an uplink channel, a downlink channel, and the like may be replaced with a side channel.

Similarly, the user terminal in the present disclosure may be replaced with a base station. In this case, the base station 10 may have the function of the user terminal 20 described above.

Certain operations described in the present disclosure to be performed by the base station may, in some cases, be performed by their upper nodes. In a network including one or a plurality of network nodes including the base station, it is clear that various operations performed to communicate with terminals may be performed by the base station, one or a plurality of network nodes other than the base station (for example, Mobility Management Entity (MME), Serving-Gateway (S-GW), and the like are conceivable, but there is no limitation), or a combination thereof.

Each aspect/embodiment described in the present disclosure may be used alone, used in a combination, and switched in association with execution. Furthermore, the order of the processing procedures, sequences, flowcharts, and the like of each aspect/embodiment described in the present disclosure may be changed as long as there is no contradiction. For example, regarding the method described in the present disclosure, elements of various steps are presented using an exemplary order, and the order is not limited to the presented specific order.

Each aspect/embodiment described in the present disclosure may be applied to a system using Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System For Mobile Communications (GSM (registered **trademark)),** CDMA2000, Ultra Mobile Broadband (UMB), IEEE 802.11 (Wi-Fi (registered **trademark)),** IEEE 802.16 (WiMAX (registered **trademark)),** IEEE 802.20, Ultra-Wide-

Band (UWB), Bluetooth (registered trademark), other appropriate radio communication methods, a next generation system extended on the basis of these, and the like. Furthermore, a plurality of systems may be combined to be applied (for example, a combination of LTE or LTE-A and 5G, and the like).

The term "on the basis of" used in the present disclosure does not mean "only on the basis of" unless otherwise specified. In other words, the term "on the basis of" means both "only on the basis of" and "at least on the basis of".

Reference to elements with designations such as "first", "second", and the like used in the present disclosure does not generally limit the quantity or order of those elements. These designations may be used in the present disclosure as a convenient method of distinguishing between two or more elements. Thus, the reference to the first and second elements does not mean that only two elements may be adopted, or that the first element must precede the second element in a certain manner.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Furthermore, "determining" may be regarded as "determining" of resolving, selecting, choosing, establishing, comparing, and the like. In other words, "determining" may be regarded as "determining" of a certain operation.

Furthermore, "determining" may be replaced with "assuming", "expecting", "considering", and the like.

The "maximum transmission power" described in the present disclosure may mean a maximum value of transmission power, the nominal UE maximum transmit power, or the rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency region, microwave region, or optical (both visible and invisible) region, or the like.

In the present disclosure, the terms "A and B are different" may mean "A and B are different from each other". Note that, the terms may mean that "A and B are each different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be implemented as a corrected and modified mode without departing from the scope of the invention as defined by the appended claims.

**Claims**

1. A terminal (20) comprising:

   a receiving section (220) configured to receive, via higher layer signaling, a configured grant configuration list including a plurality of configured grant configurations not exceeding a number of configured grant configurations that can be activated for one bandwidth part, BWP, and receive multiple downlink control information, DCI, for activation; and
   a control section (210) configured to report, as capability information, the number of configured grant configurations that can be activated, and activate a plurality of configured grant configurations in the configured grant configuration list upon reception of the multiple DCI;
   wherein the receiving section is configured to receive one or more DCI for deactivation; and
   wherein the control section is configured to deactivate a plurality of configured grant configurations upon reception of the one or more DCI.

2. The terminal (20) according to claim 1, wherein the control section (210) is configured to determine one configured grant configuration from the configured grant configuration list, based on an occurrence timing of a transport block, and is configured to perform a control of a transmission of a physical uplink shared channel, PUSCH, by using the determined one configured grant configuration.

3. A radio communication method for a terminal (20), comprising:

reporting, as capability information, a number of configured grant configurations that can be activated for one bandwidth part, BWP;
receiving, via higher layer signaling, a configured grant configuration list including a plurality of configured grant configurations not exceeding the number of configured grant configurations that can be activated;
receiving multiple down control information, DCI, for activation;
activating the plurality of configured grant configurations in the configured grant configuration list upon reception of the multiple DCI;
receiving one or more DCI for deactivation; and
deactivating the plurality of configured grant configurations upon reception of the one or more DCI.

4. A base station (10) comprising:

a transmitting section (120) configured to transmit, via higher layer signaling, a configured grant configuration list including a plurality of configured grant configurations not exceeding a number of configured grant configurations that can be activated for one bandwidth part, BWP, and transmit multiple downlink control information, DCI, for activating a plurality of configured grant configurations in the configured grant configuration list; and
a control section (110) configured to receive, as capability information, the number of configured grant configurations that can be activated for the one BWP, and control transmission of one or more DCI for deactivating a plurality of configured grant configurations.

5. A system comprising a terminal (20) according to claim 1 and a base station (10) according to claim 4.

**Patentansprüche**

1. Endgerät (20), umfassend:

einen Empfangsabschnitt (220), der so konfiguriert ist, dass er über Signalisierung auf höherer Ebene eine Konfigurationsliste konfigurierter Berechtigungen, die eine Vielzahl von Konfigurationen für konfigurierte Berechtigungen einschließt, die eine Anzahl von Konfigurationen für konfigurierte Berechtigungen, die für ein Bandbreitenteil, BWP, aktiviert werden können, nicht überschreitet, und mehrere Downlink-Steuerinformationen, DCI, zur Aktivierung empfängt; und
einen Steuerabschnitt (210), der so konfiguriert ist, dass er die Anzahl der Konfigurationen für konfigurierte Berechtigungen, die aktiviert werden können, als Fähigkeitsinformationen meldet und eine Vielzahl von Konfigurationen für konfigurierte Berechtigungen in der Konfigurationsliste konfigurierter Berechtigungen bei Empfang der mehreren DCI aktiviert;
wobei der Empfangsabschnitt so konfiguriert ist, dass er eine oder mehrere DCI zur Deaktivierung empfängt; und
wobei der Steuerabschnitt so konfiguriert ist, dass er eine Vielzahl von Konfigurationen für konfigurierte Berechtigungen bei Empfang der einen oder mehreren DCI deaktiviert.

2. Endgerät (20) nach Anspruch 1, wobei der Steuerabschnitt (210) so konfiguriert ist, dass er eine Konfiguration für konfigurierte Berechtigungen aus der Konfigurationsliste konfigurierter Berechtigungen basierend auf einem Zeitpunkt des Auftretens eines Transportblocks bestimmt, und so konfiguriert ist, dass er eine Steuerung einer Übertragung eines physikalischen gemeinsam genutzten Uplink-Kanals, PUSCH, unter Verwendung der bestimmten einen Konfiguration für konfigurierte Berechtigungen durchführt.

3. Funkkommunikationsverfahren für ein Endgerät (20), umfassend:

Melden einer Anzahl von Konfigurationen für konfigurierte Berechtigungen, die für ein Bandbreitenteil, BWP, aktiviert werden können, als Fähigkeitsinformationen;

Empfangen, über Signalisierung auf höherer Ebene, einer Konfigurationsliste konfigurierter Berechtigungen, die eine Vielzahl von Konfigurationen für konfigurierte Berechtigungen einschließt, die die Anzahl von Konfigurationen für konfigurierte Berechtigungen, die aktiviert werden können, nicht überschreitet;

Empfangen mehrerer Downlink-Steuerinformationen, DCI, zur Aktivierung;

Aktivieren der Vielzahl von Konfigurationen für konfigurierte Berechtigungen in der Konfigurationsliste konfigurierter Berechtigungen bei Empfang der mehreren DCI;

Empfangen einer oder mehrerer DCI zur Deaktivierung; und

Deaktivieren der Vielzahl von Konfigurationen für konfigurierte Berechtigungen bei Empfang der einen oder mehreren DCI.

4. Basisstation (10), umfassend:

einen Übertragungsabschnitt (120), der so konfiguriert ist, dass er über Signalisierung auf höherer Ebene eine Konfigurationsliste konfigurierter Berechtigungen überträgt, die eine Vielzahl von Konfigurationen für konfigurierte Berechtigungen einschließt, die eine Anzahl von Konfigurationen für konfigurierte Berechtigungen, die für ein Bandbreitenteil, BWP, aktiviert werden können, nicht überschreitet, und mehrere Downlink-Steuerinformationen, DCI, zum Aktivieren einer Vielzahl von Konfigurationen für konfigurierte Berechtigungen in der Konfigurationsliste konfigurierter Berechtigungen überträgt; und

einen Steuerabschnitt (110), der so konfiguriert ist, dass er die Anzahl der Konfigurationen für konfigurierte Berechtigungen, die für das eine BWP aktiviert werden können, als Fähigkeitsinformationen empfängt, und eine Übertragung einer oder mehrerer DCI zum Deaktivieren einer Vielzahl von Konfigurationen für konfigurierte Berechtigungen steuert.

5. System, das ein Endgerät (20) nach Anspruch 1 und eine Basisstation (10) nach Anspruch 4 umfasst.

**Revendications**

1. Terminal (20) comprenant :

une section de réception (220), configurée pour recevoir, par l'intermédiaire d'une signalisation de couche supérieure,

une liste de configurations d'autorisation configurée incluant une pluralité de configurations d'autorisation configurée ne dépassant pas un nombre de configurations d'autorisation configurée qui peuvent être activées pour une partie de bande passante, BWP, et recevoir de multiples informations de commande de liaison descendante, DCI, pour activation ; et

une section de commande (210) configurée pour rapporter, en tant qu'information de capacité, le nombre de configurations d'autorisation configurée qui peuvent être activées, et activer une pluralité de configurations d'autorisation configurée dans la liste de configurations d'autorisation configurée lors de la réception des multiples DCI ;

dans lequel la section de réception est configurée pour recevoir une ou plusieurs DCI pour désactivation ; et dans lequel la section de commande est configurée pour désactiver une pluralité de configurations d'autorisation configurée lors de la réception d'une ou de plusieurs DCI.

2. Terminal (20) selon la revendication 1, dans lequel la section de commande (210) est configurée pour déterminer une configuration d'autorisation configurée à partir de la liste de configurations d'autorisation configurée, sur la base d'un moment d'occurrence d'un bloc de transport, et est configurée pour effectuer une commande d'une transmission d'un canal partagé de liaison montante physique, PUSCH, en utilisant la configuration d'autorisation configurée déterminée.

3. Procédé de radiocommunication pour un terminal (20), comprenant les étapes consistant à :

rapporter, en tant qu'information de capacité, un nombre de configurations d'autorisation configurée qui peuvent être activées pour une partie de bande passante, BWP ;

recevoir, par l'intermédiaire d'une signalisation de couche supérieure, une liste de configurations d'autorisation configurée incluant une pluralité de configurations d'autorisation configurée ne dépassant pas le nombre de configurations d'autorisation configurée qui peuvent être activées ;

recevoir de multiples informations de commande de liaison descendante, DCI, pour activation ;
activer la pluralité de configurations d'autorisation configurée dans la liste de configurations d'autorisation configurée lors de la réception des multiples DCI ;
recevoir une ou plusieurs DCI pour désactivation ; et
désactiver la pluralité de configurations d'autorisation configurée lors de la réception d'une ou de plusieurs DCI.

4. Station de base (10) comprenant :

une section de transmission (120) configurée pour transmettre, par l'intermédiaire d'une signalisation de couche supérieure, une liste de configurations d'autorisation configurée incluant une pluralité de configurations d'autorisation configurée ne dépassant pas un nombre de configurations d'autorisation configurée qui peuvent être activées pour une partie de bande passante, BWP, et transmettre de multiples informations de commande de liaison descendante, DCI, pour activer une pluralité de configurations d'autorisation configurée dans la liste de configurations d'autorisation configurée ; et
une section de commande (110) configurée pour recevoir, en tant qu'information de capacité, le nombre de configurations d'autorisation configurée qui peuvent être activées pour ladite BWP, et commander la transmission d'une ou de plusieurs DCI pour désactiver une pluralité de configurations d'autorisation configurée.

5. Système comprenant un terminal (20) selon la revendication 1 et une station de base (10) selon la revendication 4.

TIME

CONFIGURED GRANT CONFIGURATION #0 (TYPE 2 CONFIGURED GRANT) →
VOICE COMMUNICATION SERVICE

CONFIGURED GRANT CONFIGURATION #1 (TYPE 1 CONFIGURED GRANT) →
LOW LATENCY PACKET DATA

FIG. 1

FIG. 2

| Parameter | Type 1 Configured-grant PUSCH | Type 2 Configured-grant PUSCH | |
|---|---|---|---|
| dataScramblingIdentityPUSCH | Corresponding to the parameter specified in PUSCH-Config | Corresponding to the parameter specified in PUSCH-Config | Can be Common |
| txConfig | Corresponding to the parameter specified in PUSCH-Config | Corresponding to the parameter specified in PUSCH-Config | Can be Common |
| DMRS-UplinkConfig | Specified as cg-DMRS-Configuration in ConfiguredGrantConfig | Specified as cg-DMRS-Configuration in ConfiguredGrantConfig | Separate |
| codebookSubset | Corresponding to the parameter specified in PUSCH-Config | Corresponding to the parameter specified in PUSCH-Config | Can be Common |
| maxRank | Corresponding to the parameter specified in PUSCH-Config | Corresponding to the parameter specified in PUSCH-Config | Can be Common |
| rbg-Size | Specified in ConfiguredGrantConfig | Specified in ConfiguredGrantConfig | Can be Common |
| frequencyHopping | Specified in ConfiguredGrantConfig | Specified in ConfiguredGrantConfig | Can be Common |
| resourceAllocation | Specified in ConfiguredGrantConfig | Specified in ConfiguredGrantConfig | Can be Common |
| pusch-TimeDomainAllocationList | Corresponding to the parameter specified in PUSCH-Config | Corresponding to the parameter specified in PUSCH-Config | Can be Common |
| pusch-AggregationFactor | Specified as repK in ConfiguredGrantConfig | Specified as repK in ConfiguredGrantConfig | Can be Common |
| repK-RV | Specified in ConfiguredGrantConfig | Specified in ConfiguredGrantConfig | Can be Common |
| mcs-Table | Specified in ConfiguredGrantConfig | Specified in ConfiguredGrantConfig | Can be Common |
| mcs-TableTransformPrecoder | Specified in ConfiguredGrantConfig | Specified in ConfiguredGrantConfig | Can be Common |
| transformPrecoder | Specified in ConfiguredGrantConfig | Specified in ConfiguredGrantConfig | Can be Common |
| tp-pi2BPSK | Not dedicated defined | Not dedicated defined | Can be Common |
| uci-OnPUSCH | Specified as CG-UCI-OnPUSCH in ConfiguredGrantConfig | Specified as CG-UCI-OnPUSCH in ConfiguredGrantConfig | Can be Common |
| Scaling | Corresponding to the parameter specified in PUSCH-Config | Corresponding to the parameter specified in PUSCH-Config | Can be Common |
| nrofHARQ-Processes | Specified in ConfiguredGrantConfig | Specified in ConfiguredGrantConfig | Can be Common |
| periodicity | Specified in ConfiguredGrantConfig | Specified in ConfiguredGrantConfig | Can be Common |
| configuredGrantTimer | Specified in ConfiguredGrantConfig | Specified in ConfiguredGrantConfig | Can be Common |

FIG. 3

| Parameter | Type 1 Configured-grant PUSCH | Type 2 Configured-grant PUSCH | |
|---|---|---|---|
| *timeDomainOffset* | Specified in *rrc-ConfiguredUplinkGrant* | DCI indicates | Separate for Type 1 |
| *timeDomainAllocation* | Specified in *rrc-ConfiguredUplinkGrant* | DCI indicates | Can be Common |
| *frequencyDomainAllocation* | Specified in *rrc-ConfiguredUplinkGrant* | DCI indicates | Can be Common |
| *antennaPort* | Specified in *rrc-ConfiguredUplinkGrant* | DCI indicates | Can be Separate |
| *dmrs-SeqInitialization* | Specified in *rrc-ConfiguredUplinkGrant* | DCI indicates | Can be Separate |
| *precodingAndNumberOfLayers* | Specified in *rrc-ConfiguredUplinkGrant* | DCI indicates | Can be Separate |
| *srs-ResourceIndicator* | Specified in *rrc-ConfiguredUplinkGrant* | DCI indicates | Can be Separate |
| *mcsAndTBS* | Specified in *rrc-ConfiguredUplinkGrant* | DCI indicates | Can be Common |
| *frequencyHoppingOffsetLists* | Specified as *frequencyHoppingOffset* in *rrc-ConfiguredUplinkGrant* | Specified in *PUSCH-Config* and DCI indicates | Can be common |
| *tpc-Accumulation* | Not dedicated defined, with corresponding UE behaviour specified in section 7.1.1 *TS38.213* | Not dedicated defined, with corresponding UE behaviour specified in section 7.1.1 *TS38.213* | Can be common |
| *p0-NominalWithoutGrant* | Specified in *PUSCH-PowerControl* | Specified in *PUSCH-PowerControl* | |
| *P0-PUSCH-Alpha* | Specified in *ConfiguredGrantConfig* | Specified in *ConfiguredGrantConfig* | Can be common |
| *powerControlLoopToUse* | Specified in *ConfiguredGrantConfig* | Specified in *ConfiguredGrantConfig* | Can be common |
| *PUSCH-PathlossReferenceRS* | Specified as *pathlossReferenceIndex* in *rrc-ConfiguredUplinkGrant* | Specified in *PUSCH-PowerControl* | Can be common |
| *deltaMCS* | Not dedicated defined | Not dedicated defined | |
| *SRI-PUSCH-PowerControl* | Indicated by *srs-ResourceIndicator* Specified in *rrc-ConfiguredUplinkGrant* | Specified in *PUSCH-PowerControl* and indicates by SRI field in DC | Can be common |
| Configuration index | | | Separate or common |
| RNTI | | | common |
| HARQ Process ID offset | | | Separate |
| Start time offset | | | Separate or common |
| TPC index | | | common |

FIG. 4

FIG. 5

FIG. 6

EP 3 876 647 B1

FIG. 7

EP 3 876 647 B1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2018199359 A1

**Non-patent literature cited in the description**

• **NOKIA ET**. On Configured Grant enhancements for NR URLLC. *3GPP DRAFT; R1-1808570_NR_URLLC_CONFIGURED-GRANTS_FINAL, 3RD GENERATION PARTNER-SHIP PROJECT (3GPP)*, 10 August 2018
• **NTT DOCOMO et al.** Summary of 7.2.6.4 Enhanced UL grant-free transmissions. *3GPP DRAFT; R1-1811822, 3RD GENERATION PARTNERSHIP PROJECT (3GPP)*, 10 October 2018

• Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010